# EUROPEAN PATENT APPLICATION

(11) **EP 0 881 833 A1**
(43) Date of publication of application: **02.12.1998**
(21) Application number: 98114053.6
(22) Date of filing: 26.07.1994
(51) Int. Cl.: H04N 7/087

(54) **Built in television for kitchen furniture comprising an electronic cookery book**

(62) Divisional of application: 94111612.1
(71) Applicant: EDICO S.r.l., I-00197 Roma (IT)
(72) Inventor: d'Errico, Federico, 00186 Roma (IT)
(74) Representative: Notaro, Giancarlo

(57) **Abstract**

A television is described; the main characteristic of the described apparatus consists in the fact that it is conceived in a particular manner so as to be utilised in a kitchen, and that it comprises a non-volatile electronic memory within which a plurality of information useful for the kitchen is stored.

## Description

The present invention refers to a television.

It is known that nowadays every family generally owns more than one television, and that, usually, one of them is situated in the kitchen, being that this is the room of the house that is most frequently used.

It is also known that kitchens are, more recently, almost always furnished with so-called fitted kitchens, made up of shelving units and floor based cabinets; said furnishings also provide for building in, or built in, electric appliances, usually found in the kitchen, such as the refrigerator and the dishwasher; such built in arrangements provide for the colours and materials of the electrical appliances to be in complete harmony with those of the actual furnishings.

US-A-4 628 351 shows a television according to the pre-characterizing portion of Claim 1.

The aim of the present invention is that of indicating how it is possible to realise a television particularly apt for being utilised in the kitchen and integrated within the kitchen.

For reaching such aims the subject of the present invention is a television as set forth in Claim 1.

Further characteristics and advantages of the present invention shall result in being clear from the following description and annexed drawings supplied purely as an explanatory and non-limiting example, wherein:
- figure 1 represents a frontal view of a television according to the invention;
- figure 2 represents two possible arrangements of a television according to the invention, in a kitchen;
- figure 3 schematically represents the block diagram of the electrical circuit of the television according to the invention;
- figure 4 represents an example of a video image containing a cookery recipe.

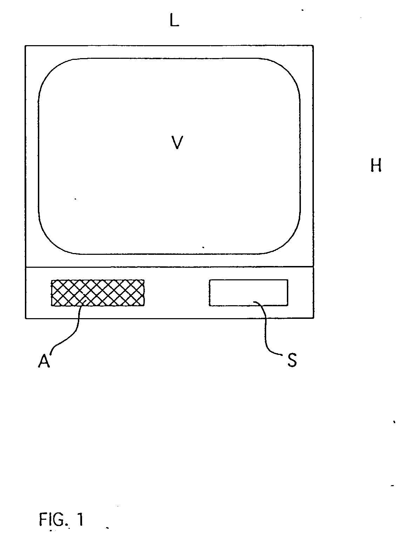

Figure 1 represents a frontal view of a television according to the invention; in figure 1 the reference symbol V indicates the television screen; with the reference symbol A a frontal speaker is indicated; with the reference symbol S an access flap to the commands of the apparatus is indicated; reference symbol L indicates the width of the television's cabinet; and finally with reference symbol H the height of the television's cabinet is indicated.

Being as that kitchen furniture is generally of a width of 45 or 60 cm, the width L of the television has been chosen in the present example as 45 cm; as a result the screen S results in being 20'' (diagonal), which is a suitable dimension for a kitchen; naturally it is also possible to utilise a different screen, for example 26'' (with a dimension L of 60 cm).

The dimension H, in the given figure, is 40 cm.

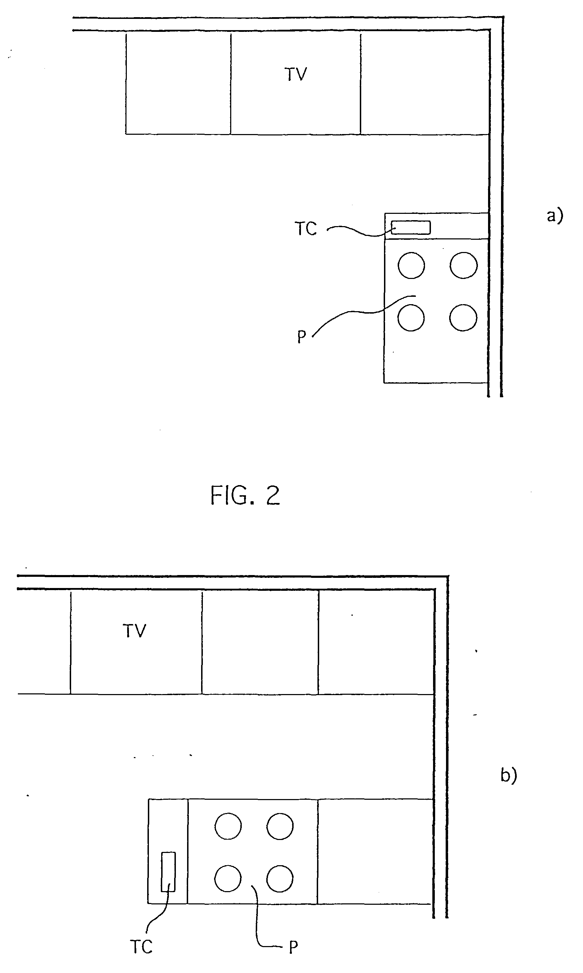

In figure 2 two possible arrangements of the television according to the invention are represented in a kitchen; in part a) of figure 2 a corner of a kitchen is schematically represented; a television is seen towards the top, indicated with the symbol TV, against a wall (and naturally arranged above a base cabinet, or incorporated in a column, as is usual for example with ovens); on the other wall, to the right, a cooking hob is seen, indicated with symbol P.

To the side of the cooking hob P the television's remote control unit TC is indicated, that shall be described in detail in the following. In part b) of figure 2 another possible arrangement is schematically represented: to the top, against a wall, incorporated in a series of fitted cabinets, the television can be seen, indicated with the symbol TV; below a dependent cabinet is visible to which a cooking hob is incorporated, indicated with the symbol P. Also here, to the right of the hob, the remote control of the television is visible, indicated with the symbol TC.

Such remote control unit, that functions according to the principle of infrared rays, must be directed towards the television for its correct functioning. A housing for the remote control unit, to the side of the cooking hob, is provided, so as that the user, that is cooking, or is about to cook, has it easily at hand without having to search for it, as is usually the case; with the aims of ease of use it is provided that upon pressing the remote control, it is spring released from its housing, remaining however anchored to its support; said support can be revolved so as to allow it to be pointed in the direction of the television. After use the remote control is made to enter once more in its housing by pressing an appropriate button situated on the edge of the hob. Naturally it is provided that the remote control be waterproof and dust proof, according to known techniques already used for electrical appliances.

The cabinet that has to house the television, in the case that it is not simply free standing on a shelf, has to provide for, in its lower section, a so called chimney such as those used, for example, with built in refrigerators. This detail has the aim of permitting a suitable air flow for the television that could otherwise suffer from breakdowns caused by overheating of the television itself.

Being as that the television is destined for use above all in the kitchen, particular attention has to be given to the safety of the user, that may have wet hands or may touch the television with one hand and a tap with the other and therefore find himself under the potential risk of getting an electric shock; therefore not only do all the standards issued by competent bodies (CEI Standards) have to be rigorously followed, but eventual external commands must be protected against eventual infiltrations of liquids or dust that could have negative results on the electrical insulation.

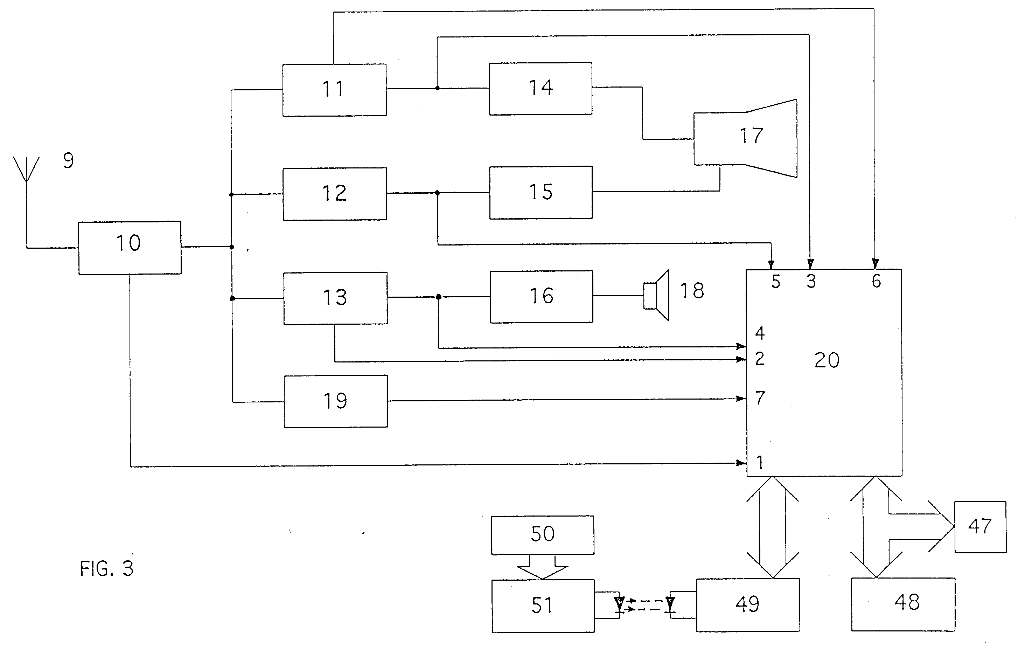

Figure 3 schematically represents the block diagram of the electrical circuit of the television according to the invention; in figure 3; reference number 10 indicates the block of the tuning and amplification circuits of the television signals received by the antenna 9; with reference number 11 the block of the decoding and matrixing circuits of the luminance and chrominace video signals is indicated; reference number 12 indicates the block of the extraction circuits of the synchronism video signals; reference number 13 indicates the block of the amplification and decoding circuits of the audio signal; reference number 14 indicates the block of the amplification circuits of the colour signals R, G, B; reference number 15 indicates the block of the deflexion signals generation circuits for the image display device; reference number 16 indicates the block of the amplification circuits of the audio signal; reference number 17 indicates the image display device, for example a coloured picture tube; reference number 18 indicates the sonorous reproduction device, for example a loud speaker; reference number 19 indicates the block of the circuits for the extraction and decoding of the teletext signal.

Finally reference number 20 indicates the block of the control circuits, being specific to the television according to the invention; block 20 may for example be realised utilising a microprocessor, joined to a read and write memory (RAM, indicated with reference number 47), preferably of the non-volatile type, and to a read only permanent memory (ROM, indicated with reference number 48).

In the first, teletext pages can be stored for example containing cookery recipes (Televideo by RAI transmits for instance at least one recipe daily on page 627); with this in mind the remote control unit TC can be provided with an appropriate memory key that, upon being pressed by the user, provides for storing in the RAM memory the displayed teletext page.

Stored in the ROM memory on the other hand, according to the invention, are not only the operative instructions for the microprocessor, but also a series of arranged recipes, making up a cookery book, to which the user may have access, guided by an appropriate operative menu, for consultation.

The two memories are connected to the control unit 20 by way of a bus, as is normal.

The control unit 20 is also connected to a circuit, indicated with reference number 49, that has the function of a receiver of signals of infrared rays, coming from the remote control unit TC, that comprises a transmitter, indicated with the reference number 51, and a command key board, indicated with reference number 50, to which the transmitter 51 is in turn connected.

The commands given by the user, by way of the key board 50, through the transmitter 51 and the receiver 49, reach the control unit 20, that provides to decode such commands and to carry out the appropriate operations so as that the commands are executed.

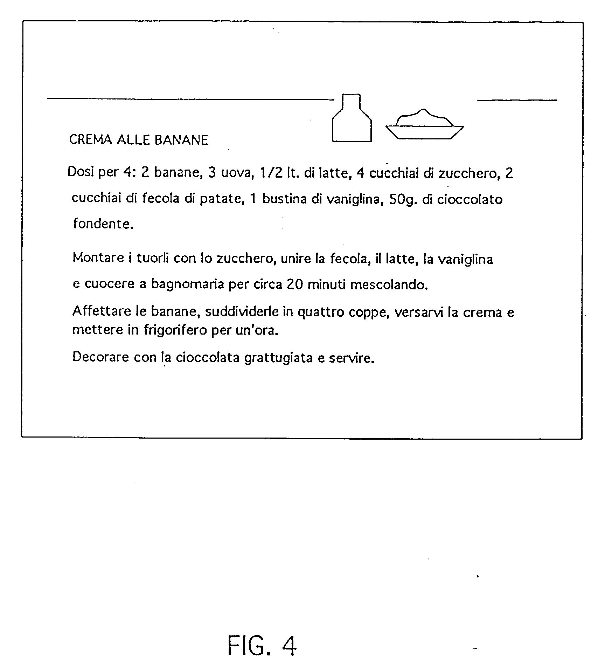

In figure 4 an example of a screen display is represented showing a cookery recipe.

The representation of a screen display is provided in the form of a menu for guiding the user in the choice of the recipes stored in the ROM 48; in a preferred embodiment of the invention such menu allows for various possibilities of access, managed by the control circuit 20.

For example at least three possibilities can be provided:
- the usual way, in which access is given to sub-menus containing the recipes divided into categories (hors-d'oeuvre, soups, meat dishes, fish dishes, desserts, etc.);
- the way in which the recipes are divided based on the time of execution needed (recipes that can be carried out in half an hour, in an hour, in two hours, etc.);
- the way in which the recipes are divided based on the ingredients available: in this case the user indicates the ingredients the he or she has and the television will display the recipes that can be carried out using the indicated ingredients.

Advantageously the control unit 20 can be connected, by way of a bus, to an available external plug-socket, to which it is possible to connect other computerised electrical appliances so as to obtain a display of command data and control signals coming from the same.

From the given description the characteristics of the television subject of the present invention result in being clear, as do its advantages.

In particular, the television according to the invention results in being extremely practical for the user that in the kitchen can, so to say, combine the useful with amusement, being able to follow favourite television programs and always having the availability of a handy cookery book that will never be lost. The appropriate positioning of the television in the kitchen, and the specific positioning of the remote control unit, eases the consultation of the cookery book, without the user having to leave the vicinity of the cooker, that, as is known, requires constant surveillance.

It is clear that numerous variants can be made to the television subject of the present invention, without for this departing from the novelty principles inherent in the innovative idea, as it is also clear that in the practical realisation of the invention the materials and the form of the details illustrated can be different, and they may also be substituted by technically equivalent elements.

A possible variant could be that of providing the use of a part of the RAM 47 as a memorandum of notes of things to buy; in such a case the key board of the remote control will be able to generate alphanumeric signals; in particular, the ROM 48 could have a dictionary of the things that usually are needed in a kitchen and the remote control unit could provide the possibility of scrolling the items stored and, when those that are needed have been found, place them in the display of the memorandum.

## Claims

1. Television, conceived so as to be utilised in a kitchen, and comprising a non-volatile electronic memory (ROM) within which a plurality of information useful for the kitchen is stored, characterised in that it also comprises a memory of the read-write type (RAM) within which it is possible to store by commands recipes transmitted through the teletext service.

2. Television, according to claim 1, characterised in that an appropriate memory key is provided on the remote control unit (TC) that, when pressed by the user, provides to store in the read-write memory (RAM) the displayed teletext page.
